Europäisches Patentamt

European Patent Office

Office européen des brevets

(19)

(11) **EP 1 164 590 A2**

(12) **EUROPEAN PATENT APPLICATION**

(43) Date of publication:
**19.12.2001 Bulletin 2001/51**

(51) Int Cl.⁷: $G11B\ 20/18$

(21) Application number: **01305083.6**

(22) Date of filing: **11.06.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **14.06.2000 JP 2000184535**

(71) Applicant: **SONY CORPORATION
Tokyo 141 (JP)**

(72) Inventor: **Nishimura, Hajime,
c/o Intell. Property Departm.
Shinagawa-ku, Tokyo 141 (JP)**

(74) Representative: **Turner, James Arthur et al
D. Young & Co., 21 New Fetter Lane
London EC4A 1DA (GB)**

(54) **Information playback apparatus, information processing method and information recording medium**

(57) The present invention relates to an information playback apparatus, an information-recording method and an information-recording medium. For example, the present invention can be applied to an optical-disc drive and a magnetic-disc drive such as a hard-disc drive for recording video data.

To be more specific, when playback data including a bit error difficult to correct is detected, or when a an access is made to a defective sector, recognizable dummy data (DM) is used as a substitute for the playback data supposed to be read out from the defective sector.

As a result, error recovery processing can be carried out with a high degree of efficiency when priority is given to continuity of output data.

FIG. 1

**Description**

The present invention relates to an information playback apparatus, an information-recording method and an information-recording medium.

Traditionally, as an apparatus for recording audio data and video data which are together referred to hereafter as AV data, a video tape recorder using a magnetic tape as a recording medium is used in a broad range of applications. In such a video tape recorder, AV data input continuously along the time axis is delimited, being divided into field and frame units of audio data, and recorded onto a magnetic tape in a slanting direction.

In a personal computer, on the other hand, pieces of software such as application programs are stored in a hard disc of a hard-disc drive. The density of the hard disc is increased while the size thereof is decreased at a very high pace in recent years.

The hard-disc drive is connected to the personal computer by an interface such as ATA (AT Attachment) or SCSI (Small Computer System Interface), and functions as a peripheral of the personal computer, allowing data to be managed in sector units in various kinds of processing such as alternate processing to replace a defective area, error correction processing and retry processing. In this way, data recorded on the hard disc can be played back with a very degree of reliability by virtue of the various kinds of processing.

By the way, also for recording AV data, it is also conceivably possible to construct a recording apparatus that has a small size and can be used for recording data for a long time by employing such a hard-disc drive. In this case, contiguity of data in the hard-disc drive is taken into consideration more than data reliability.

That is to say, in the case of a video signal, by using correlation along the time axis, interpolation processing can be carried out even in the event of a bit error. In addition, with application of this technique to an operation to display a continuous picture, there is a demand for transmission of playback data in a real-time manner.

As described above, a hard-disc drive employed in a recording apparatus is required to give more priority to continuity of data than reliability of data in comparison with a hard-disc drive employed in a personal computer. To put it concretely, there are a demand for a reduced number of retries and a demand for a capability of outputting continuous data without a retry and alternate processing.

Various respective aspects and features of the invention are defined in the appended claims.

Embodiments of the present invention can be applied to an optical-disc drive and a magnetic-disc drive such as a hard-disc drive for recording video data. By virtue of embodiments of the present invention, error recovery processing can be carried out with a high degree of efficiency when playback data including a bit error difficult to correct is detected, or when it is necessary to carry out processing to give priority to continuity of output data by generating recognizable dummy data as a substitute for the playback data supposed to be read out from a defective sector in a read operation making an access to the defective sector.

Embodiments of the present invention addressing the problems described above, can provide an information playback apparatus and an information-processing method that are capable of carrying out error recovery processing with a high degree of efficiency in the case of processing giving higher priority to an operation of outputting such continuous data and to provide an information-recording medium for storing the information-processing method.

In order to solve or at least alleviate the problems described above, the present invention is applied to an information playback apparatus or an information-recording method in accordance with claim 1 or 11 respectively wherein recognizable dummy data used as a substitute for the playback data containing a bit error difficult to correct is output to later processing in case such playback data is detected.

In addition, the present invention is applied to an information playback apparatus or an information-recording method in accordance with claim 6 or 12 respectively wherein recognizable dummy data used as a substitute for the playback data recorded in a defective sector is output to later processing as a result of an access to the defective sector.

Furthermore, the present invention is applied to an information-recording medium for storing an information-processing method in accordance with claim 13 wherein recognizable dummy data used as a substitute for the playback data containing a bit error difficult to correct is output to later processing in case such playback data is detected.

Moreover, the present invention is applied to an information-recording medium for storing an information-processing method in accordance with claim 14 wherein recognizable dummy data used as a substitute for the playback data recorded in a defective sector is output to later processing as a result of an access to the defective sector.

In accordance with a configuration as in claim 1 or 11, recognizable dummy data used as a substitute for the playback data containing a bit error difficult to correct is output to later processing in case such playback data is detected. Thus, error recovery processing can be carried out by a processing means at a later stage, and priority can be given to continuity of output data. As a result, the error recovery processing can be carried out with a high degree of efficiency.

In accordance with a configuration as in claim 6 or 12, recognizable dummy data used as a substitute for the playback data recorded in a defective sector is output to later processing as a result of an access to the defective sector. Thus, error recovery processing can be carried out by a processing means at a later stage, and priority can be given to continuity of output data. As a result, the error recovery processing can be carried out with a high degree of efficiency.

In accordance with a configuration as in claim 13 or 14, it is possible to provide an information-recording medium for storing an information-processing method allowing priority to be given to continuity of output data and, hence, the error recovery processing to be carried out with a high degree of efficiency.

The invention will now be described by way of example with reference to the accompanying drawings, throughout which like parts are referred to by like references, and in which:

Fig. 1 is a block diagram showing details of an hard-disc drive implemented by an embodiment of the present invention;

Fig. 2 is a block diagram showing an outline of the hard-disc drive shown in Fig. 1;

Fig. 3 is a table used for explaining a recording area of a hard disc employed in the hard-disc drive shown in Fig. 2;

Fig. 4 is a table containing a file management data recorded in a directory area of the recording area shown in Fig. 3;

Fig. 5 is a table containing codes recorded in a FAT area of the recording area shown in Fig. 3;

Fig. 6 shows a flowchart representing a processing procedure of a central processing unit employed in the hard-disc drive shown in Fig. 1;

Fig. 7 shows a continuation flowchart of the flowchart shown in Fig. 6; and

Fig. 8 shows a continuation flowchart of the flowchart shown in Fig. 7.

First of all, a preferred embodiment of the present invention is described by referring to diagrams as follows.

1: Configuration of the Embodiment

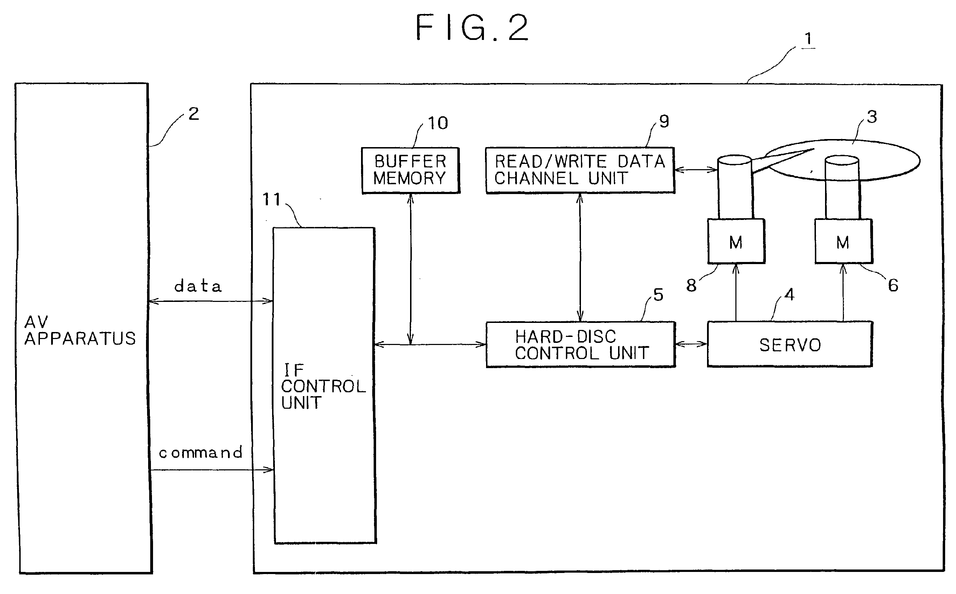

Fig. 2 is a block diagram showing a hard-disc drive 1 implemented by an embodiment of the present invention. The hard-disc drive 1 is mounted on a personal computer (PC) or an AV apparatus 2 such as a set top box or a photographing apparatus, and used for recording various kinds of data output by the personal computer or the external AV apparatus 2. With the hard-disc drive 1 mounted on the personal computer or the external AV apparatus 2, the hard-disc drive 1 is capable of playing back the recorded data. As an alternative, the hard-disc drive 1 is dismounted and re-mounted on another personal computer or another AV apparatus for playing back the recorded data.

For the purposes described above, the hard-disc drive 1 is mounted on an AV apparatus or the like in such a way that the hard-disc drive 1 can be dismounted or re-mounted with a high degree of freedom. Compressed data, text data and the like are exchanged between the hard-disc drive 1 and the external AV apparatus 2 or the personal computer. The compressed data is obtained as a result of compression of AV data in accordance with a predetermined format. In addition, other information such as control commands, status and addresses, which accompanies the transfers of the data, is also exchanged between the hard-disc drive 1 and the external AV apparatus 2 or the personal computer. The hard-disc drive 1 records the data into a hard disc 3 employed in the hard-disc drive 1 and plays back recorded data, outputting the playback data to the external AV apparatus 2 or the personal computer.

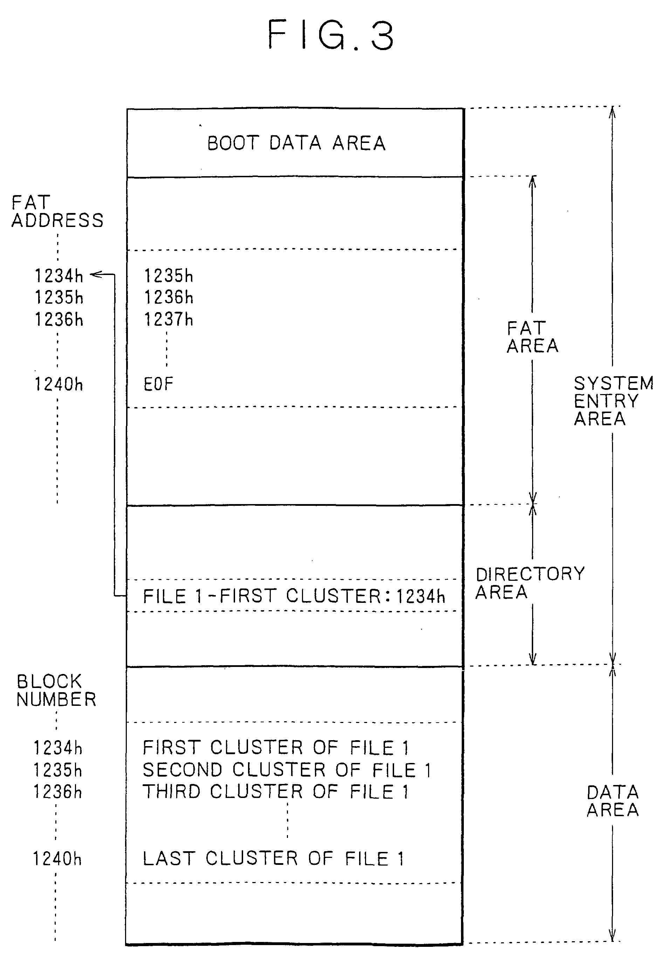

The hard disc 3 is formatted as shown in Fig. 3. As shown in the figure, an information-recording surface of the hard disc 3 is divided into an inner-circumference-side area and an outer-circumference-side area, which are allocated as a system entry area and a data area respectively.

The data area is further finely divided into clusters. In each of the clusters, AV data is recorded in units each corresponding to the amount of data contained in a predetermined number of frames. It should be noted that, in this embodiment, in the case of a hard disc 3 used for recording AV data compressed in accordance with an MPEG (Moving Picture Experts Group) format, 1 cluster is allocated to AV data of 1 GOP.

It should be noted that the information-recording surface of the hard disc 3 is delimited, being divided into a plurality of concentric zones. The track of each of the zone is further delimited in the circumferential direction into a plurality of sectors each having a predetermined length. The number of sectors per track for a zone on an outer-circumferential side is greater than the number of sectors per track for a zone on an inner-circumferential side. By applying a zone bit recording technique which changes a recording frequency in dependence on the location of the zone, the information-recording surface can be used with a high degree of efficiency.

Each sector on the information-recording surface of the hard disc 3, which is divided into zones each comprising sectors as described above, is identified by a physical address composed of a sector number for identifying the sector on a track, a track number for identifying the track and a surface number for identifying the information-recording surface. Track numbers are sequence numbers assigned sequentially one after another to tracks starting with the one on the outermost circumference of the information-recording surface. User data is managed in file units by using logical addresses also set sequentially one after another starting from the outermost circumference of the information-recording surface. The logical addresses are each associated with a physical address.

A logical address can be regarded as a cluster number assigned to a cluster which is formed by setting a plurality of logical sectors into a unit. A logical sector is an area used as a unit of data recording. The area at the beginning of the information-recording surface, that is, an area on the outermost circumference, is allocated to as logical sector 0. In this embodiment, 1 physical sector is associated with 1 logical sector on a one-to-one basis. A logical-sector number assigned to each logical sector can be expressed by Eq. (1) as follows:

$$\text{Logical-sector number} = \text{The number of sectors per}$$

$$\text{track} \times (\text{Surface number} + \text{The number of surfaces} \times \text{Track}$$

$$\text{number}) + \text{Sector number} - 1 \tag{1}$$

where the surface number, the track number and the sector number compose a physical address.

This embodiment has a configuration wherein a logical sector is used for recording 512-byte user data, and a plurality of logical sectors compose 1 cluster. It should be noted that, in general, 1 cluster consists of a number of clusters where the number is equal to the nth power of 2. A cluster is identified by a cluster number. Cluster numbers are sequence numbers with a cluster number of 2 assigned to the beginning of a file area in the data area for storing user data.

In this way, a cluster number is assigned to each cluster in the data area so that an access to the data area can be made in cluster units with a cluster number used as a reference. It should be noted that, in this embodiment, a cluster number is expressed in a hexadecimal format comprising 4 digits.

On the other hand, the system entry area is divided into a boot area, a FAT (Fail Allocation Table) area and a directory area. The boot area is used for recording data defining the structure of the hard disc 3. On the contrary, the FAT area and the directory area are used for recording, among others, address information required for making an access to AV data recorded in the data area.

To put it in detail, the directory area is used for recording information such as the name of each file stored in the data area and the number of the first cluster in each file or the recording start point of each file. On the other hand, the FAT area is used for storing information such as numbers assigned to clusters following the first cluster of each file. The hard disc 3 detects the number of the first cluster of a file identified by a file name from the directory area then sequentially detects numbers assigned to clusters following the first cluster one after another from the FAT area. In this way, addresses of successive clusters forming a file can be detected.

Assume that file 1 is stored in clusters identified by cluster numbers of 1234h to 1240h in the data area as shown in Fig. 3. In this case, a code representing the number 1234h assigned to the first cluster of file 1 is stored in the directory area. The cluster numbers following the number 1234h are sequentially stored one after another in respective locations in the FAT area. It should be noted that, in the example shown in Fig. 3, the EOF (End of File) is information identifying the last cluster of a file.

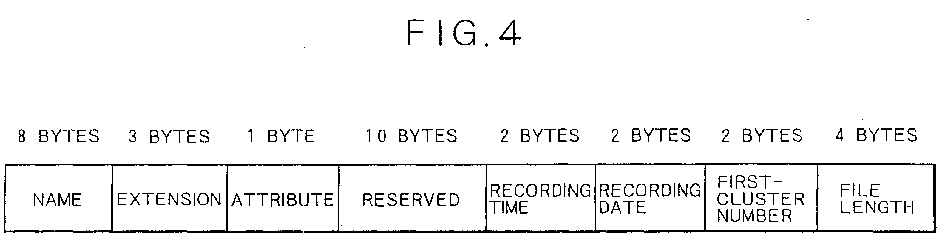

To put it in detail, the directory area is used for recording file management data for each file stored in the hard disc 3. The file management data has a format shown in Fig. 4. As shown in the figure, the format starts with 8 bytes for recording the name of the file. The name of the file is followed by 3 bytes for recording an extension of the file. The extension is followed by 1 byte for storing an attribute of the file. The attribute is followed by 10 reserved bytes followed by 2 bytes for storing a recording start time. The recording start time is followed by 2 bytes for storing a recording date followed by 2 bytes for recording a cluster number assigned to the first cluster of the file. The last 4 bytes are used for recording the length of the file.

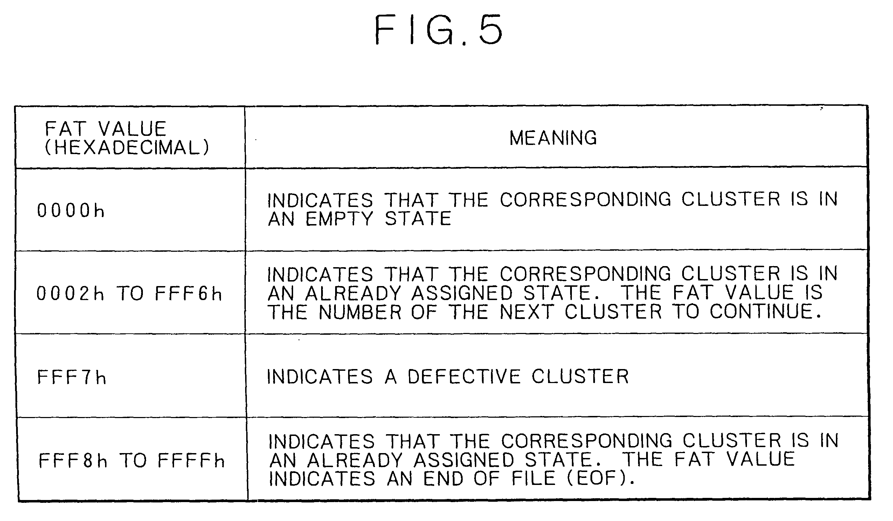

In the FAT area shown in Fig. 3, on the other hand, cluster addresses are allocated to the cluster number recorded in data area. At the cluster addresses, numbers assigned to successive clusters following the first cluster are recorded. Codes not used as cluster numbers are allocated to an empty area, a defective cluster and the EOF as shown in Fig. 5.

Thus, by making an access to the FAT area, an empty area in the hard disc 3 can be found. In addition, alternate processing can be carried out for a defective sector. Furthermore, by carrying out retry processing wherein written data is verified in a recording operation, a defective sector can be detected and cataloged. These pieces of processing thus allow the information-recording surface of the hard disc 3 to be managed in predetermined block units in the same way as a file management system applied to a personal computer.

Controlled by a hard-disc control circuit 5 shown in Fig. 2, a servo circuit 4 drives a motor (M) 6 for rotating the hard disc 3 at a predetermined rotational speed. In addition, the servo circuit 4 also drives a motor (M) 8 to put a magnetic head in a seek operation and to execute tracking control.

Controlled by the hard-disc control circuit 5 in a recording operation, a read/write data channel unit 9 encodes data output by the hard-disc control circuit 5 by adoption of a technique proper for a characteristic of a recording/playback system in order to generate a train of bits for driving the magnetic head. In a playback operation, on the other hand, the read/write data channel unit 9 carries out signal processing on a playback signal produced by the magnetic head in order to generate playback data. The playback data is supplied to the hard-disc control circuit 5.

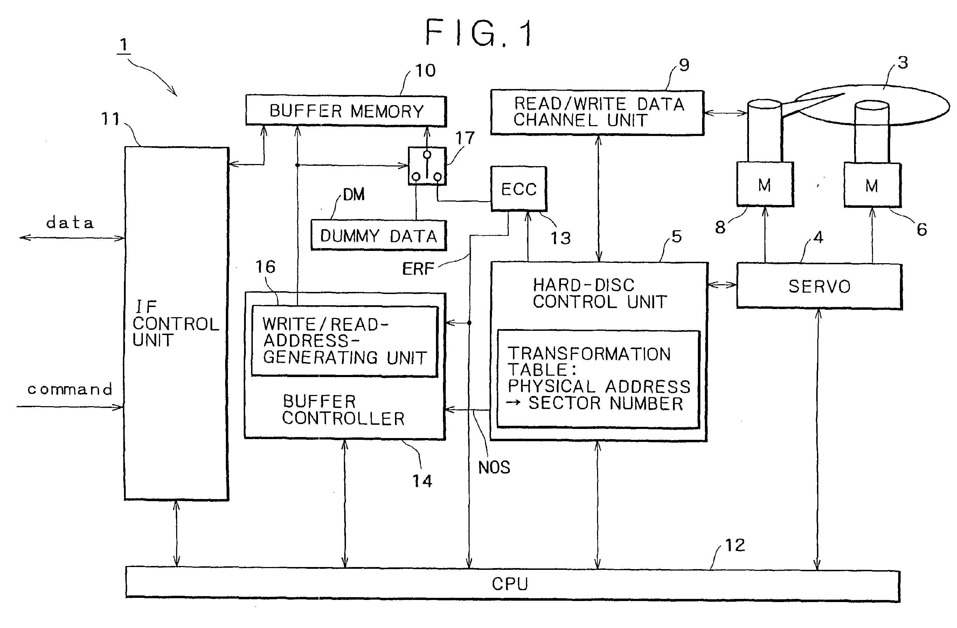

The hard-disc control circuit 5 is a control circuit for controlling data on the hard disc 3 in accordance with a command issued by a central processing unit 12 shown in Fig. 1. The hard-disc control circuit 5 also controls the operation of the servo circuit 4 in accordance with AV data received from a buffer memory 10. The AV data is output to the read/write data channel unit 9 to be finally recorded onto a cluster specified by the central processing unit 12. In a playback operation to reproduce data from a cluster specified by the central processing unit 12, on the other hand, the hard-disc control circuit 5 controls the operation of the servo circuit 4 in the same way and outputs data generated by the read/write data channel unit 9 to the buffer memory 10.

An interface control circuit (IF control unit) 11 is typically an SCSI controller, an IDE controller or an ATA controller. The interface control circuit 11 functions as an input/output circuit for handling data exchanged between the external AV apparatus 2 and the hard-disc drive 2 as well as receiving other information such as control commands and addresses from the external AV apparatus 2. To be more specific, in a recording operation, the interface control circuit 11 receives AV data from the external AV apparatus 2 and outputs the data to the hard-disc control circuit 5 through the buffer memory 10. In a playback operation, on the other hand, AV data received from the hard-disc control circuit 5 by way of the buffer memory 10 is supplied to the external AV apparatus 2.

Fig. 1 is a block diagram showing more details of the hard-disc drive 1 shown in Fig. 2. That is to say, while Fig. 2 shows a basic configuration of the hard-disc drive 1, Fig. 1 shows a detailed configuration thereof. The hard-disc drive 1 records and plays back AV data onto and from the hard disc 3. It should be noted that Fig. 1 does not show flows of data in the peripheral configuration of the buffer memory 10 during a recording operation in order to make the explanation simple.

To put it in detail, a error correction circuit (ECC) 13 employed in the hard-disc drive 1 adds error correction codes to AV data received through the buffer memory 10 in a recording operation. In addition, the error correction circuit (ECC) 13 also carries out error correction processing adopting a write-and-verify technique. Thus, by carrying out retry processing repeatedly, a defective sector can be detected. In a playback operation, on the other hand, the error correction circuit (ECC) 13 carries out error correction processing on AV data output by the hard-disc control circuit 5 before supplying the AV data to the buffer memory 10. When the error correction circuit (ECC) 13 detects a bit error difficult to correct in the error correction processing, the error correction circuit (ECC) 13 sets a bit error flag ERF, outputting error information as a result of the error correction processing.

A the buffer controller 14 is a controller for controlling the buffer memory 10 in accordance with a control command output by the central processing unit 12. To be more specific, the buffer controller 14 controls addresses in the buffer memory 10 by selectively providing the buffer memory 10 with a read or write address generated by a write/read-address-generating circuit 16.

To put it in detail, in a recording operation, the buffer controller 14 outputs a write address to the buffer memory 10 synchronously to AV data generated intermittently from the interface control circuit 11. The AV data generated by the interface control circuit 11 is stored into the buffer memory 10 at the write address. In addition, with a predetermined timing, the buffer controller 14 outputs a read address in place of a write address to the buffer memory 10, and reads out AV data from the read address in the buffer memory 10, supplying the data to the error correction circuit (ECC) 13. At that time, controlled by the central processing unit 12, the buffer controller 14 outputs the same read address repeatedly, carrying out retry processing or alternate processing to read out AV data from the same sector of the hard disc 3 through the buffer memory 10.

In addition, in a playback operation, the buffer controller 14 outputs a write address to the buffer memory 10 synchronously to AV data generated intermittently from the error correction circuit (ECC) 13. The AV data generated by the error correction circuit (ECC) 13 is stored into the buffer memory 10 at the write address. Furthermore, with a predetermined timing, the buffer controller 14 outputs a read address in place of a write address to the buffer memory 10 and reads out AV data from the read address in the buffer memory 10, supplying the data to the interface control circuit 11.

At that time, controlled by the central processing unit 12, the buffer controller 14 outputs a write address to carry out retry processing and alternate processing so as to update corresponding data recorded in the buffer memory 10 with AV data played back correctly in by these pieces of processing. It should be noted that the buffer controller 14 issues a write address for each sector with increasing sector numbers NOS used as a reference for as much AV data as indicated by a transfer length. The sector numbers NOS sequentially increases, starting from 0. Thus, in a playback operation, playback data is written into the buffer memory 10, being managed in sector units. In a recording operation, on the other hand, AV data is read out from the buffer memory 10, also being managed in sector units. As a result, in the retry processing and the alternate processing during recording and playback operations, address control can be executed with ease. By the way, the sector numbers NOS are different from the sector numbers on the hard disc 3, which were explained earlier by referring to Fig. 3.

It should be noted that, for these reasons, the hard-disc control circuit 5 updates an embedded transformation table in accordance with access control executed by the central processing unit 12. In addition, the hard-disc control circuit 5 transforms a physical address of a sector being accessed into a sector number NOS by using this transformation table, and notifies the buffer controller 14 of this sector number NOS.

[0046] If the buffer controller 14 is informed of the error flag ERF by the error correction circuit (ECC) 13 in a playback operation during these various kinds of control, the buffer controller 14 executes control to switch the contact point of a select circuit 17 by using a sector number NOS supplied by the hard-disc control circuit 5 as a reference. By switching the select circuit 17 in this way, dummy data DM is stored temporarily in the buffer memory 10 in place of 1-sector AV data played back from a sector containing a bit error difficult to correct.

In addition, in a playback operation, informed by the hard-disc control circuit 5, the buffer controller 14 stores dummy data DM temporarily in the buffer memory 10 in place of playback data generated as a result of an access to a defective sector in the same way as a sector containing a bit error difficult to correct.

It should be noted that the dummy data DM is data recognizable in subsequent processing. The dummy data DM is a unique pattern never generated as playback AV data in a playback operation. In this embodiment, the dummy data DM for a sector comprises the logic value 1 or 0 in all the bits thereof or comprises a repeated pattern of logic values of 01. Thus, even if the hard-disc drive 1 outputs the dummy data DM stored temporarily in the buffer memory 10 to the external AV apparatus 2, the external AV apparatus 2 is capable of recognizing the dummy data DM and carrying out error recovery processing based on typically interpolation.

The central processing unit 12 functions as a controller for controlling the operation of the hard-disc drive 1. When the power supply is turned on, the central processing unit 12 reads out data from the boot data area of the hard disc 3 and carries out initialization processing. In the initialization processing, the central processing unit 12 reads out data from the FAT area and the directory area of the hard disc 3, storing the data into a memory not shown in the figure.

As the initialization is completed, the central processing unit 12 analyzes a command received from the interface control circuit 11 and executes a predetermined processing procedure in accordance with a result of the command analysis in order to control the whole operations.

To put it in detail, when the central processing unit 12 receives a playback command from the external AV apparatus 2 or the personal computer through the interface control circuit 11, the central processing unit 12 searches the directory area's data stored in the memory for a file name included in the command. Assume that the playback command inputted by the external AV apparatus 2 includes the name of file 1. In this case, the central processing unit 12 finds the name of file 1 in the search and detects a code representing a cluster number of 1234h assigned to the first cluster of file 1 as shown in Fig. 3.

The central processing unit 12 further makes an access based on this detected code to the FAT area's data stored in the memory to read out a number assigned to a cluster following the first cluster from a FAT address indicated by the cluster number 1234h. In the case of the example shown in Fig. 3, the number assigned to a cluster following the first cluster is 1235h. The central processing unit 12 sequentially reads out numbers following the number 1235h from the FAT area one number after another till an EOF is detected. The cluster number 1234h read out from the directory area and the subsequent cluster numbers read out from the FAT area starting with 1235h are used to make accesses to the clusters of file 1 recorded in the data area of the hard disc 3. To put it in detail, first of all, data recorded in the first cluster of file 1 specified in the playback command received from the external AV apparatus 2 is played back from the hard disc 3 and supplied to the external AV apparatus 2 by way of the hard-disc control circuit 5, the buffer memory 10 and the interface control circuit 11.

Then, after playing back the data of the first cluster, the central processing unit 12 uses the next cluster number read out from the FAT area to play back AV data of the next cluster, that is, the second cluster in this case, from the data area. This operation is carried out repeatedly till an EOF is read out from the FAT area as the next cluster number. In this way, the central processing unit 12 plays back AV data of a file specified in a playback command received from the external AV apparatus 2 in data area by using sequentially following cluster numbers recorded in the FAT area.

In these pieces of processing, the central processing unit 12 controls the whole operations so that, when a defective sector is encountered, an access is made to an alternate sector used in alternate processing in a recording operation. In addition, the central processing unit 12 also controls the whole operations so as to carry out retry processing when a bit error difficult to correct is detected as indicated by the error flag ERF output by the error correction circuit (ECC) 13.

When a recording command is received from the external AV apparatus 2, on the other hand, the central processing unit 12 controls the operation of the hard-disc control circuit 5 in the same way as a playback command to search the FAT area 's data stored in the memory for a series of 0000h codes each indicating an empty cluster. The central processing unit 12 further controls the operation of the hard-disc control circuit 5 so as to make accesses to clusters in the data area of the hard disc 3, which are each identified by a code of 0000h. AV data received from the external AV apparatus 2 is then recorded in the empty clusters in the data area of the hard disc 3 sequentially one cluster after another.

The central processing unit 12 records the AV data received sequentially from the external AV apparatus 2 into the hard disc 3 in cluster units. In the mean time, the central processing unit 12 also updates the FAT area's data stored in the memory concurrently with the recording operation. When the operation to record AV data is completed, the directory area's data stored in the memory is updated. To be more specific, a file management data shown in Fig. 4 is created. The central processing unit 12 further updates the FAT and directory areas recorded on the hard disc 3 in accordance with the updated data stored in the memory. In this way, the system entry area of the hard disc 3 is updated to put the recorded AV data in a readily reproducible state.

In these pieces of processing, the central processing unit 12 controls the whole operations so as to carry out a read-after-write operation in predetermined sector units. The whole operations are controlled so that, if a bit error difficult to correct is detected from a sector, retry processing is carried out on the sector repeatedly. If a bit error difficult to correct is detected persistently from the sector even during the retry processing carried out repeatedly, the sector is determined to be a defective sector and alternate processing is performed. Then, data stored in the FAT area is updated to reflect the replacement of the defective sector by an alternate sector.

The external AV apparatus 2 also provides the central processing unit 12 with a playback command imposing a condition according to a request issued in processing carried out by the external AV apparatus 2 in addition to the ordinary recording and playback commands for making requests for recording and playback operations respectively as described above. That is to say, the hard-disc drive 1 is required to play back continuous AV data. If the playback AV data is not reproduced continuously, the interrupted continuity of the reproduced AV data raises a problem in processing carried out at the subsequent stage by the external AV apparatus 2 or the personal computer. To put it concretely, in this embodiment, the playback command issued by the external AV apparatus 2 or the personal computer with such a condition makes a request for a transfer of data within a predetermined period of time set for the data to be played back.

Assume that the central processing unit 12 receives a playback command imposing such a time condition as well as including a read address and a data-transfer length representing the amount of data to be played back, carrying out a playback operation requested by the command. In this case, the central processing unit 12 controls the whole operations so as to satisfy the condition imposed by the command, that is, to give priority to continuity of the reproduced AV data, outputting the data as playback data. It should be noted that the read address is a logical address indicating the beginning of the playback object. The central processing unit 12 converts the logical address into a physical address included in a command supplied to the hard-disc control circuit 5 to request the hard-disc control circuit 5 to carry out a playback operation. On the other hand, the data-transfer length is a parameter representing the amount of data to be played back. Typically, the data-transfer length specifies a sector count. The time limitation specifies an upper limit indicating a maximum allowable period of time between the issuance of the command imposing the condition and completion of a transfer of reproduced AV data to the external AV apparatus 2 or the personal computer.

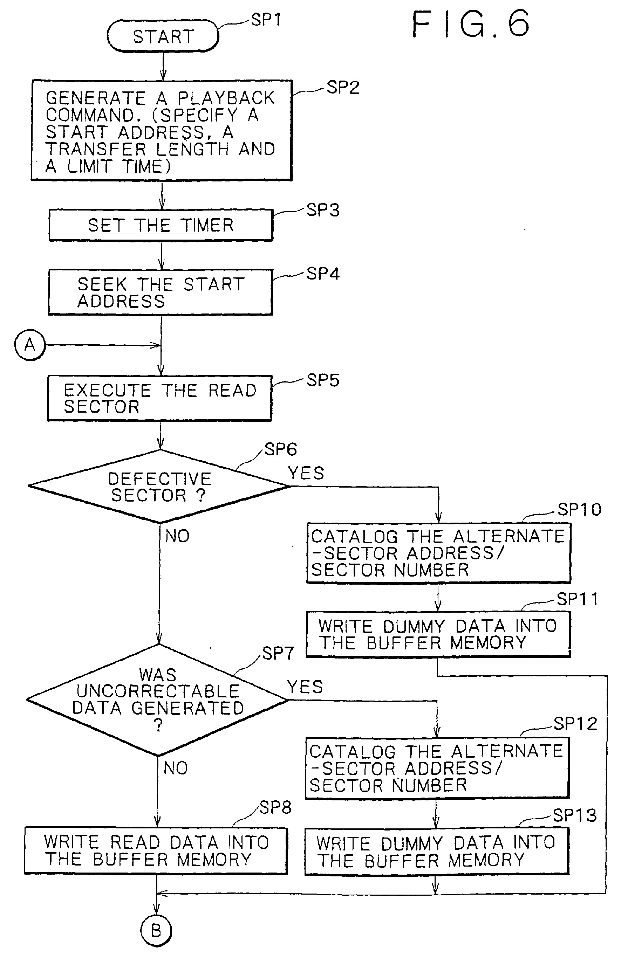

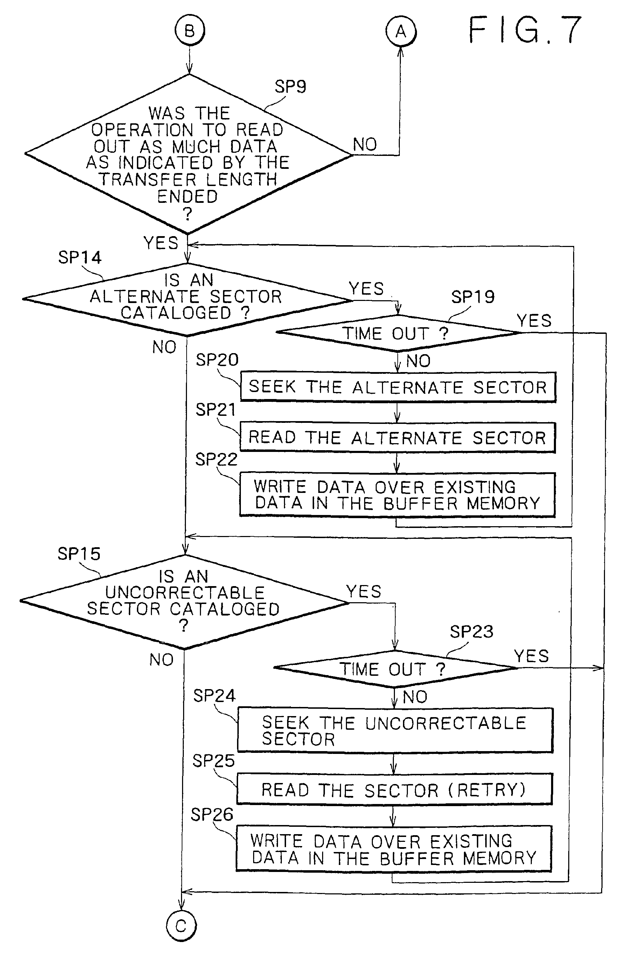

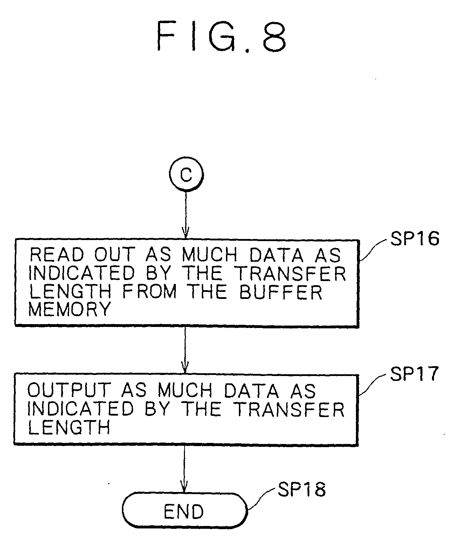

Figs. 6 to 8 show a flowchart representing a processing procedure executed by the central processing unit 12 to process an incoming playback command. As shown in Fig. 6, the flowchart begins with a transition from a step SP1 to a step SP2 at which the central processing unit 12 receives a playback command from the external AV apparatus 2 or the personal computer. At the next step SP3, the central processing unit 12 resets an embedded timer. It should be noted that the timer is used for forming a judgment on an upper time limit.

At the next step SP4, the central processing unit 12 issues a seek command to the servo circuit 4 to drive the magnetic head to seek a start sector indicated by a read address specified in the playback command. At the next step SP5, the central processing unit 12 issues a request for an operation to play back data from the start sector. At the next step SP6, the central processing unit 12 forms a judgment as to whether or not the sector serving as a playback object is defective. If the sector is not defective, the flow of the processing procedure goes on to a step SP7 to form a judgment as to whether or not the error correction circuit (ECC) 13 has detected a bit error difficult to correct.

If the error correction circuit (ECC) 13 has not detected a bit error difficult to correct, the flow of the processing procedure goes on to a step SP8 at which the central processing unit 12 waits for completion of an operation to store the playback data containing a bit error difficult to correct into the buffer memory 10. At the next step SP9, the central processing unit 12 forms a judgment as to whether or not the operation to play back as much AV data as indicated by a transfer length has been completed. If the operation to play back as much AV data as indicated by a transfer length has not been completed, the flow of the processing procedure goes on to the step SP5 at which the central processing unit 12 issues a result for an operation to play back data from the following sectors.

If the outcome of the judgment formed at the step SP6 indicates that the sector serving as a playback object is defective, on the other hand, the flow of the processing procedure goes on to a step SP10 at which the central processing unit 12 stores a sector address of alternate processing for the defective sector in a memory shown in none of the figures. At the next step SP11, dummy data is stored in the buffer memory 10. The flow of the processing procedure then goes on to the step SP9.

If the outcome of the judgment formed at the step SP7 indicates that the error correction circuit (ECC) 13 has detected a bit error difficult to correct, on the other hand, the flow of the processing procedure goes on to a step SP12 at which the address of a sector containing the bit error difficult to correct is stored in the memory shown in none of the figures. At the next step SP13, the central processing unit 12 waits for completion of an operation to store dummy data DM into the buffer memory 10. The flow of the processing procedure then goes on to the step SP9.

If the playback command received from the external AV apparatus 2 or the personal computer is a command imposing a condition on a transfer of data, the central processing unit 12 cancels retry processing as well as alternate processing, and stores dummy data DM in the buffer memory 10 in place of data which would be played back by the retry processing or the alternate processing. In this way, AV data is played back by giving priority to continuity of the output data.

As the central processing unit 12 plays back as much AV data as indicated by the transfer length by outputting dummy data DM as described above, the outcome of the judgment formed at the step SP9 indicates an acknowledgment. In this case, the flow of the processing procedure goes on to a step SP14 at which the central processing unit 12 forms a judgment as to whether or not a sector was involved in the alternate processing and cataloged at the step SP10. If such a sector was not cataloged, the flow of the processing procedure goes on to a step SP15 at which the central processing unit 12 forms a judgment as to whether or not a sector with a bit error difficult to correct was cataloged at the step SP12. If such a sector was not cataloged, the flow of the processing procedure goes on to a step SP16.

At the step SP16, the central processing unit 12 issues a command to output AV data stored in the buffer memory 10 to the external AV apparatus 2 or the personal computer. At the next step SP17, the central processing unit 12 enters a state of waiting for as much AV data as indicated by the transfer length to be output. As the operation to output the AV data is completed, the flow of the processing procedure goes on to a step SP18 at which the processing procedure is ended.

In an operation carried out by the hard-disc drive 1 to play back AV data as requested by a playback command wherein neither defective sector is involved nor a bit error difficult to correct is generated as described above, the reproduced AV data is temporarily stored in the buffer memory 10 before being output to the external AV apparatus 2 or the personal computer.

In an operation carried out by the hard-disc drive 1 to play back AV data as requested by a playback command wherein an access is made to a plurality of sectors due to involvement of a defective sector, on the other hand, the outcome of the judgment formed at the step SP14 is an acknowledgment. In this case, the flow of the processing procedure goes on from the step SP14 to the step SP19 at which the central processing unit 12 forms a judgment as to whether or not the transfer of data involving retry processing has been completed within the upper time limit specified in the playback command by examination of the lapse of time with reference to the timer reset at the step SP3. If it is difficult to complete the transfer of data within the upper time limit, the central processing unit 12 determines a time-out. In this case, the flow of the processing procedure goes on from the step SP19 to the step SP16.

Thus, when dummy data DM is resorted instead of performing alternate processing due to the fact that there is no time margin for carrying out the alternate processing from the beginning, the central processing unit 12 outputs the dummy data DM in place of playback data of a defective sector to the external AV apparatus 2 or the personal computer, and leaves error recovery processing for the defective sector to the external AV apparatus 2 or the personal computer.

When there is a time margin for carrying out the alternate processing, on the other hand, the central processing unit 12 carries out the alternate processing. That is to say, if the outcome of the judgment formed at the step SP19 is a negation, on the contrary, the flow of the processing procedure goes on to a step SP20 at which the central processing unit 12 requests the servo circuit 4 to seek an alternate sector. At the next step SP21, the central processing unit 12 issues a command to play back AV data from the alternate sector. Then, at the step SP22, the dummy data DM stored in the buffer memory 10 is replaced with the reproduced AV data before the flow of the processing procedure goes back to the step SP14.

Thus, after playing back AV data by using dummy data DM as a substitute for some of the AV data to eliminate retry processing and alternate processing in an operation to play back AV data by giving priority to continuity of the AV data, the central processing unit 12 carries out alternate processing if there is a time margin. That is to say, the hard-disc drive 1 itself performs error recovery processing by carrying out alternate processing only if there is a time margin.

If a bit error difficult to correct is generated, on the other hand, the outcome of the judgment formed at the step SP15 will be an acknowledgment. In this case, the flow of the processing procedure goes on from the step SP15 to a step SP23 at which the central processing unit 12 forms a judgment as to whether or not the transfer of data involving retry processing has been completed within the upper time limit specified in the playback command by examination of the lapse of time with reference to the timer reset at the step SP3 as is the case with alternate processing. If it is difficult to complete the transfer of data within the upper time limit, the central processing unit 12 determines a time-out. In this case, the flow of the processing procedure goes on from the step SP23 to the step SP16.

Thus, when dummy data DM is resorted instead of performing retry processing due to the fact that there is no time margin for carrying out the retry processing from the beginning, the central processing unit 12 outputs the dummy data DM in place of playback data of a defective sector to the external AV apparatus 2 or the personal computer, and leaves error recovery processing for the defective sector to the external AV apparatus 2 or the personal computer.

When there is a time margin for carrying out the retry processing, on the other hand, the central processing unit 12 carries out the retry processing. That is to say, if the outcome of the judgment formed at the step SP23 is a negation, on the contrary, the flow of the processing procedure goes on to a step SP24 at which the central processing unit 12 requests the servo circuit 4 to seek a sector generating a bit error difficult to correct. At the next step SP25, the central processing unit 12 issues a command to play back AV data from the sector. Then, at the step SP26, replacing the dummy data DM stored in the buffer memory 10 with the reproduced AV data is waited before the flow of the processing procedure goes back to the step SP15.

Thus, after playing back AV data by using dummy data DM as a substitute for some of the AV data without carrying out retry processing and alternate processing in an operation to play back AV data by giving priority to continuity of the AV data, the central processing unit 12 carries out retry processing if there is a time margin. That is to say, the hard-disc drive 1 itself performs error recovery processing by carrying out alternate processing only if there is a time margin.

It should be noted that, even if alternate processing and retry processing are carried out in case there is a time margin as described above, the central processing unit 12 monitors generation of a bit error difficult to correct. If a bit error difficult to correct is generated, the central processing unit 12 carries out the pieces of processing of the steps SP12 and SP13.

2: Operation of the Embodiment

In the embodiment described above, the hard-disc drive 1 shown in Fig. 2 is mounted typically on the external AV apparatus 2 such as a photographing apparatus or a set top box. When the power supply is turned on, data recorded in the system entry area of the hard disc 3 is loaded into the memory.

When the hard-disc drive 1 receives a recording control command from the external AV apparatus 2, AV data following the control command is supplied to the read/write data channel unit 9 by way the hard-disc control circuit 5. The read/write data channel unit 9 modulates the AV data into a format proper for recording, and uses a result of the modulation for driving the magnetic head which records the result of the modulation into empty areas of the hard disc 3 sequentially one record are after another. At that time, the hard-disc drive 1 sequentially detects the empty areas of the hard disc 3 from the system entry area's data loaded into the memory as shown in Figs. 3 and 5. In this way, the AV data is recorded sequentially into the detected empty areas. In addition, the system entry area's data loaded into the memory as shown in Fig. 4 is updated to reflect the AV data area just recorded in the empty areas. Then, the system entry area of the hard disc 3 is also updated to the system entry area's updated data stored in the memory.

In these pieces of processing, the hard-disc drive 1 carries out retry processing repeatedly when a bit error difficult to correct is detected in write-and-verify processing. If a bit error difficult to correct is detected persistently in the retry processing carried out repeatedly, a sector generating the bit error is determined to be a defective sector. In this case, alternate processing is carried out and data recorded in the FAT area is updated to reflect a result of the alternate processing. Alternate processing is carried out also for a defective sector detected during processing such as formatting of the disc. Also in this case, alternate processing is carried out, and data recorded in the FAT area is updated to reflect a result of the alternate processing.

When a playback control command is received by the hard-disc drive 1 with the external AV apparatus 2 connected to the hard-disc drive 1 or the external AV apparatus 2 disconnected from the hard-disc drive 1 and another external apparatus connected thereto instead, a playback signal obtained from the magnetic head is processed by the read/write data channel unit 9 to play back AV data. The AV data is output to the external AV apparatus 2 by way of the hard-disc control circuit 5 and the interface control circuit 11. At that time, the hard-disc drive 1 searches the system entry area's data stored in the memory for numbers of successive clusters for recording the AV data. The numbers are used to find the clusters from which the AV data is played back sequentially one cluster after another. The clusters belong to a file specified in the playback control command issued by the external AV apparatus 2.

As described above, in an operation to record or play back AV data, the hard-disc drive 1 inserts dummy data recognizable by an external apparatus into the AV data instead of carrying out retry processing and alternate processing when receiving a playback command imposing a time condition. Thus, the hard-disc drive 1 is capable of playing back AV data in accordance with the condition imposed by the external apparatus 2 or the personal computer, and leaves error recovery processing to the external apparatus 2 or the personal computer. In this operation, the hard-disc drive 1 carries out retry processing and alternate processing whenever possible and when time permits, and performs the error recovery processing on behalf of the external apparatus 2 or the personal computer.

To put it in detail, the hard-disc drive 1 shown in Fig. 1 drives the magnetic head into a seek operation in accordance with information set in the playback control command, and sequentially reproduced AV data is subjected to error correction processing carried out by the error correction circuit (ECC) 13 before being temporarily stored in the buffer memory 10. Then, the AV data stored in the buffer memory 10 is output to the external apparatus 2 or the personal computer within the limit time set in the playback control command.

In this processing, when a bit error difficult to correct is detected, the hard-disc drive 1 switches the contact point of the select circuit 17 to record dummy data DM into the buffer memory 10 in place of reproduced AV data without carrying out retry processing on a sector generating the bit error. In addition, in an access to a defective sector, the hard-disc drive 1 also records dummy data DM into the buffer memory 10 instead of making an access to an alternate sector for the defective sector.

As described above, when there is no time margin for satisfying the time limitation, pieces of AV data stored in the buffer memory 10 are sequentially output to the external AV apparatus 2 or the personal computer one piece after another. In this way, for a defective sector or a sector generating a bit error difficult to correct, dummy data DM is output in place of reproduced AV data. These AV data and dummy data DM are output to the external AV apparatus 2 or the personal computer along the time axis. When detecting dummy data DM, the external AV apparatus 2 is capable of carrying out error recovery processing for video data by interpolation using typically frame correlation and for audio data by interpolation of data along the time axis.

If there is a time margin for satisfying the time limitation, on the other hand, retry processing is carried out for a sector generating a bit error difficult to correct while an access is made to an alternate sector for a defective sector in order to replace dummy data DM stored in the buffer memory 10 with correct AV data. With dummy data DM replaced by correct AV data as such, the hard-disc drive 1 carries out error recovery processing and outputs AV data to the external AV apparatus 2 or the personal computer along the time axis.

Thus, when the hard-disc drive 1 carries out processing giving priority to continuity of output data, the external apparatus 2 or the personal computer is allowed to perform error recovery processing. If possible, however, the hard-disc drive 1 itself carries out the error recovery processing. Thus, from the entire-system point of view, the error recovery processing can be carried out with a high degree of efficiency.

3: Effects of the Embodiment

In the configuration described above, when playback data containing a bit error difficult to correct is detected in an access to a defective sector, recognizable dummy data is stored in the buffer memory 10 before being output to the external AV apparatus 2 or the personal computer. In this case, error recovery processing is left to the external AV apparatus 2. Thus, continuos data can be output to the external apparatus 2 or the personal computer. As a result, from the entire-system point of view, the error recovery processing can be carried out with a high degree of efficiency with priority given to continuity of the output data.

Furthermore, the operation to output playback data, some of which is replaced with dummy data as described above, to an external apparatus can be carried out by storing dummy data in the buffer memory 10 in the event of a bit error difficult to correct and by storing dummy data in the buffer memory 10 to replace data recorded in a defective sector. Thus, an address controller on the read-address side needs only to read out data containing dummy data used as substitutes for AV data from the buffer memory 10 along the time axis.

In addition, data recorded in the buffer memory 10 is output to satisfy a time-limiting condition, and retry processing as well as alternate processing are carried out as long as the condition is satisfied. Thus, the hard-disc drive 1 is capable of carrying out error recovery processing in place of the external AV apparatus 2 or the personal computer whenever possible. As a result, from the entire-system point of view, the error recovery processing can be carried out with a high degree of efficiency by being distributed between the hard-disc drive 1 and the external AV apparatus 2 or the personal computer at a good balance.

4: Other Embodiments

It should be noted that the embodiment described above exemplifies a case in which dummy data is stored in the buffer memory 10 in sector units in the event of a bit error difficult to correct. It should be noted, however, that the scope of the present invention is not limited to this embodiment. For example, dummy data only for bytes each containing a bit error can be stored in the buffer memory 10. It is also worth noting that, in retry processing of this case, control of buffer-memory addresses can be executed so as to rewrite only the dummy data.

In addition, the embodiment described above exemplifies a case in which dummy data is inserted into playback AV data by being stored in the buffer memory 10. It should be noted, however, that the scope of the present invention is not limited to this embodiment. For example, dummy data can also be inserted into playback AV data during an operation to output the data to the external AV apparatus 2 or the personal computer.

Furthermore, the embodiment described above exemplifies a case in which AV data is played back in accordance with a request for a transfer of data within a predetermined time set in a playback command as a parameter. It should be noted, however, that the scope of the present invention is not limited to this embodiment. For example, an operation to output AV data is started upon reception of a command making a request for such an operation after the playback command. In this case, error recovery processing and alternate processing can be carried out before the command making a request for an output operation is received. Moreover, instead of adopting the technique of using a playback command specifying such a parameter, the parameter can be cataloged in advance.

In addition, the embodiment described above exemplifies a case in which error recovery processing is carried out prior to execution of processing for an alternate sector. It should be noted, however, that the scope of the present invention is not limited to this embodiment. For example, the error recovery processing for a bit error takes precedence of alternate processing.

Furthermore, the embodiment described above exemplifies a case in which dummy data is inserted into playback AV data when a bit error difficult to correct is generated and/or an access is made to a defective sector. It should be noted, however, that the scope of the present invention is not limited to this embodiment. For example, dummy data is inserted into playback AV data when either a bit error difficult to correct is generated or an access is made to a defective sector.

Moreover, the embodiment described above exemplifies a case in which AV data is played back. It should be noted, however, that the scope of the present invention is not limited to this embodiment. For example, the present invention can be applied widely to a case in which various kinds of data allowing a bit error to be corrected by interpolation are generated. Examples of such data are audio data and video data of a static picture.

In addition, the embodiment described above exemplifies a case in which the present invention is applied to a hard-disc drive employed in an information playback apparatus. It should be noted, however, that the scope of the present invention is not limited to this embodiment. For example, the present invention can be applied widely to an information playback apparatus wherein an optical-disc drive is connected to or embedded in equipment, and data recorded in the optical-disc drive is output to the equipment.

In accordance with embodiments of the present invention described above, when playback data containing a bit error difficult to correct is detected from a defective sector or an access is made to the defective sector, recognizable dummy data serving as a substitute for the playback data recorded in the sector is output. As a result, error recovery processing can be carried out with a high degree of efficiency by giving priority to continuity of output data even if a bit error difficult to correct is detected in a playback operation.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information playback apparatus comprising:

   data playback means for playing back data from a disc recording medium and outputting playback data;
   bit error correction means for correcting a bit error generated in said playback data; and
   a buffer memory for temporarily storing data output by said error correction means and outputting stored data to later-stage processing,
   wherein recognizable dummy data used as a substitute for said playback data containing a bit error difficult to correct is output to said later-stage processing when said playback data is detected by said error correction means.

2. The information playback apparatus according to claim 1, wherein recognizable dummy data used as a substitute for said playback data containing a bit error difficult to correct is output to said later-stage processing in case said playback data is detected by said error correction means by executing the steps of:

   storing said dummy data in said buffer memory on the basis of a result of error correction processing carried out by said error correction means; and
   sequentially outputting data stored in said buffer memory in accordance with a predetermined order.

3. The information playback apparatus according to claim 1, wherein data stored in said buffer memory is output in accordance with a limitation requested by said later-stage processing and when retry processing carried out makes it possible to output playback data corresponding to said dummy data in accordance with said limitation, said retry processing is carried out to reproduce said playback data corresponding to said dummy data and said playback data is output in place of said dummy data.

4. The information playback apparatus according to claim 3, wherein said limitation requested by said later-stage processing is a request for a transfer of data in a predetermined order within a predetermined time and said request is made by an external apparatus in a command specifying an operation to play back said data.

5. The information playback apparatus according to claim 3, wherein said limitation requested by said later-stage processing is a request for a transfer of data stored in said buffer memory and said request is made by an external apparatus after a command specifying an operation to play back said data.

6. An information playback apparatus comprising:

data playback means for playing back data from a disc recording medium and outputting playback data; and
a buffer memory for temporarily storing said playback data to be output to later-stage processing,
wherein recognizable dummy data used as a substitute for said playback data recorded in a defective sector
of said disc recording medium is output to said later-stage processing as a result of an access to said defective
sector.

7. The information playback apparatus according to claim 6, wherein recognizable dummy data used as a substitute
for said playback data recorded in said defective sector is output to said later-stage processing by executing the
steps of:

storing said dummy data in said buffer memory as a result of an access to said defective sector; and
sequentially outputting data stored in said buffer memory in accordance with a predetermined order.

8. The information playback apparatus according to claim 6, wherein data stored in said buffer memory is output in
accordance with a limitation requested by said later-stage processing and when alternate processing carried out
makes it possible to output playback data corresponding to said dummy data in accordance with said limitation,
said alternate processing is carried out to reproduce said playback data and said playback data is output in place
of said dummy data.

9. The information playback apparatus according to claim 8, wherein said limitation requested by said later-stage
processing is a request for a transfer of data in a predetermined order within a predetermined time and said request
is made by an external apparatus in a command specifying an operation to play back said data.

10. The information playback apparatus according to claim 8, wherein said limitation requested by said later-stage
processing is a request for a transfer of data stored in said buffer memory and said request is made by an external
apparatus after a command specifying an operation to play back said data.

11. An information playback method for playing back data from a disc recording medium and outputting playback data,
said information playback method comprising the steps of:

correcting a bit error generated in said playback data reproduced from said disc recording medium;
temporarily storing data with said error corrected in a buffer memory;
outputting said data stored in said buffer memory to later-stage processing; and
outputting recognizable dummy data used as a substitute for said playback data containing a bit error difficult
to correct is output to said later-stage processing when said playback data is detected in said step of correcting
a bit error generated in said playback data.

12. An information playback method for playing back data from a disc recording medium and outputting playback data,
said information playback method comprising the steps of:

temporarily storing said playback data reproduced from said disc recording medium in a buffer memory
outputting said data stored in said buffer memory to later-stage processing; and
outputting recognizable dummy data used as a substitute for said playback data to said later-stage processing
as a result of an access to said defective sector.

13. An information-recording medium for recording an information playback method for playing back data from a disc
recording medium and outputting playback data wherein said information playback method comprises the steps of:

correcting a bit error generated in said playback data reproduced from said disc recording medium;
temporarily storing data with said error corrected in a buffer memory;

outputting said data stored in said buffer memory to later-stage processing; and

outputting recognizable dummy data used as a substitute for said playback data containing a bit error difficult to correct to said later-stage processing when said playback data is detected in said step of correcting a bit error generated in said playback data.

14. An information-recording medium for recording an information playback method for playing back data from a disc recording medium and outputting playback data wherein said information playback method comprises the steps of:

temporarily storing said playback data reproduced from said disc recording medium in a buffer memory;

outputting said data stored in said memory to later-stage processing; and

outputting recognizable dummy data used as a substitute for said playback data to said later-stage processing as a result of an access to said defective sector.

# FIG. 1

IF CONTROL UNIT — 11

data

command

BUFFER MEMORY — 10

17

DM

DUMMY DATA

ECC — 13

ERF

READ/WRITE DATA CHANNEL UNIT — 9

WRITE/READ-ADDRESS-GENERATING UNIT — 16

BUFFER CONTROLLER — 14

HARD-DISC CONTROL UNIT — 5

TRANSFORMATION TABLE: PHYSICAL ADDRESS → SECTOR NUMBER

NOS

M — 8

M — 6

SERVO — 4

3

CPU — 12

EP 1 164 590 A2

# FIG.2

EP 1 164 590 A2

# FIG. 3

BOOT DATA AREA

FAT
ADDRESS

1234h ← 1235h
1235h    1236h
1236h    1237h

1240h    EOF

FAT
AREA

SYSTEM
ENTRY
AREA

DIRECTORY
AREA

FILE 1-FIRST CLUSTER : 1234h

BLOCK
NUMBER

1234h    FIRST CLUSTER OF FILE 1
1235h    SECOND CLUSTER OF FILE 1
1236h    THIRD CLUSTER OF FILE 1

1240h    LAST CLUSTER OF FILE 1

DATA
AREA

16

# FIG. 4

| NAME | EXTENSION | ATTRIBUTE | RESERVED | RECORDING TIME | RECORDING DATE | FIRST-CLUSTER NUMBER | FILE LENGTH |
|---|---|---|---|---|---|---|---|
| 8 BYTES | 3 BYTES | 1 BYTE | 10 BYTES | 2 BYTES | 2 BYTES | 2 BYTES | 4 BYTES |

# FIG.5

| FAT VALUE (HEXADECIMAL) | MEANING |
| --- | --- |
| 0000h | INDICATES THAT THE CORRESPONDING CLUSTER IS IN AN EMPTY STATE |
| 0002h TO FFF6h | INDICATES THAT THE CORRESPONDING CLUSTER IS IN AN ALREADY ASSIGNED STATE. THE FAT VALUE IS THE NUMBER OF THE NEXT CLUSTER TO CONTINUE. |
| FFF7h | INDICATES A DEFECTIVE CLUSTER |
| FFF8h TO FFFFh | INDICATES THAT THE CORRESPONDING CLUSTER IS IN AN ALREADY ASSIGNED STATE. THE FAT VALUE INDICATES AN END OF FILE (EOF). |

EP 1 164 590 A2

FIG.6

START — SP1

GENERATE A PLAYBACK COMMAND. (SPECIFY A START ADDRESS, A TRANSFER LENGTH AND A LIMIT TIME) — SP2

SET THE TIMER — SP3

SEEK THE START ADDRESS — SP4

(A)

EXECUTE THE READ SECTOR — SP5

DEFECTIVE SECTOR ? — SP6
YES →
NO ↓

CATALOG THE ALTERNATE -SECTOR ADDRESS/ SECTOR NUMBER — SP10

WRITE DUMMY DATA INTO THE BUFFER MEMORY — SP11

WAS UNCORRECTABLE DATA GENERATED ? — SP7
YES →
NO ↓

CATALOG THE ALTERNATE -SECTOR ADDRESS/ SECTOR NUMBER — SP12

WRITE READ DATA INTO THE BUFFER MEMORY — SP8

WRITE DUMMY DATA INTO THE BUFFER MEMORY — SP13

(B)

FIG.7

(B)     (A)

**SP9**
WAS THE
OPERATION TO READ
OUT AS MUCH DATA
AS INDICATED BY THE
TRANSFER LENGTH
ENDED
?

NO

YES

**SP14**
IS AN
ALTERNATE SECTOR
CATALOGED ?

YES

**SP19**
TIME OUT ?

YES

NO

NO

**SP20**
SEEK THE ALTERNATE SECTOR

**SP21**
READ THE ALTERNATE SECTOR

**SP22**
WRITE DATA OVER EXISTING
DATA IN THE BUFFER MEMORY

**SP15**
IS AN
UNCORRECTABLE
SECTOR CATALOGED
?

YES

NO

**SP23**
TIME OUT ?

YES

NO

**SP24**
SEEK THE UNCORRECTABLE
SECTOR

**SP25**
READ THE SECTOR (RETRY)

**SP26**
WRITE DATA OVER EXISTING
DATA IN THE BUFFER MEMORY

(C)

# FIG.8

C

READ OUT AS MUCH DATA AS INDICATED BY THE TRANSFER LENGTH FROM THE BUFFER MEMORY ⟋ SP16

OUTPUT AS MUCH DATA AS INDICATED BY THE TRANSFER LENGTH ⟋ SP17

END ⟋ SP18